# EUROPEAN PATENT SPECIFICATION

(11) **EP 0 711 199 B1**
(45) Date of publication and mention of the grant of the patent: **17.03.1999**
(21) Application number: 94924532.8
(22) Date of filing: 29.07.1994
(51) Int. Cl.: B01D 69/14, B01D 67/00

(54) **COMPOSITE MEMBRANES AND THEIR PREPARATION FROM POLYMER PARTICLES ON A POROUS SUBSTRATE**
VERBUNDMEMBRANEN UND DEREN HERSTELLUNG AUS POLYMERTEILCHEN AUF EINEM PORÖSEN SUBSTRAT
MEMBRANES COMPOSITES ET LEUR PREPARATION A PARTIR DE PARTICULES POLYMERES SUR UN SUBSTRAT POREUX

(30) Priority: 29.07.1993 US 99684
(43) Date of publication of application: 15.05.1996
(73) Proprietor: THE DOW CHEMICAL COMPANY, Midland, Michigan 48674 (US)
(72) Inventor: RIES, Paul, D., Midland, MI 48640 (US); MCDONALD, Charles, J., Midland, MI 48640 (US)
(74) Representative: Casalonga, Axel
(86) International application number: US9408642
(87) International publication number: WO9503878

(56) References cited:
- EP-A- 0 450 894
- WO-A-89/00592
- DE-B- 1 047 164
- FR-A- 2 099 183
- FR-A- 2 575 398
- JP-A- 4 213 334
- Ullmann's Encyclopedia of Industrial Chemistry Vol. A11, pages 396-399.

## Description

The present invention relates to a process of preparing porous composite membranes for ultrafiltration and microfiltration with particles of polymer on a porous support and the membranes thereof.

The use of membranes in liquid separation processes is rapidly growing in the chemical, food, beverage, electronic, and pharmaceutical industries. The membranes are becoming increasingly important in environmental technology such as the recycling of waste waters in laundry systems.

Ultrafiltration and microfiltration are well recognized pressure driven processes for liquid separations. Ultrafiltration and microfiltration membranes typically have pore sizes that range from 0.001 µm to 10.0 µm. They are often made by processes that involve phase inversion of a polymer solution stimulated by temperature or a solvent/non-solvent combination.

There are a number of problems associated with currently practiced technology of micro- and ultrafiltration membranes. In particular, a given manufacturing process is restricted to limited choice of surface chemistry and control of pore size. Membrane performance is accordingly narrowed by these constraints. A major problem is the flux decline caused by fouling of the membrane surface. It would be desirable to improve the versatility and ease of membrane fabrication to obtain surfaces which would have reduced fouling tendencies. Such an efficient fabrication technology would be economical and expand the applications of membrane technology.

It is an object of this invention to utilize the properties of polymer particles to form closely packed structures and develop porous membranes which are easy to prepare, economically attractive; chemically stable; versatile in their application; and which possess desirable thermal, mechanical, and flux properties.

It is further an object of this invention to obtain a stable porous composite membrane of uniform structure which is essentially free of cracks; stable to flux; and stable to backflushing and conventional cleaning solutions necessary for a given liquid separation.

EP-A-0 450 894 discloses a porous polytetrafluoroethylene structure comprised of granular-type polytetrafluoroethylene, viz., the granular form produced by precipitation polymerization techniques, which have been fused together to form a porous integral network of interconnected particles. FR-A-2099183 discloses ultrafiltration membranes formed by filtering an emulsion of generally spherical submicron polymer particles formed by emulsion polymerization through a permeable substrate on which the particles are deposited on one side.

It has been discovered that particles of polymers can be deposited on a porous substrate having broad pore size distribution to obtain a composite membrane with a narrower pore size distribution. The interstitial voids between the particles form pores that can discriminate between the solute molecules or particulates for the purpose of carrying out a liquid separation. The composite membranes so obtained are used, for example, as ultrafiltration and microfiltration membranes for liquid separations. As well recognized in the art, such membranes can exist in a variety of configurations such as flat sheet, cassette, spiral wound and hollow fiber modules.

In one aspect, the present invention relates to a process of preparing a porous composite membrane comprising:
a) depositing discrete, spherical, polymeric particles, obtained by suspension, dispersion or emulsion polymerization, on a porous substrate in one or more steps, whereby a composite with an array of the particles on the Substrate is obtained, the particles having a morphology with predominantly polar or hydrophilic polymers on the surface; and
b) using thermal coalescence of the particles or chemical means to stabilize the composite to obtain a composite membrane.

In another aspect, the invention is a porous composite membrane as defined by claim 12 comprising a stable, i.e. capable of passing water under pressure in either dead-end or cross-flow mode in either direction with minimal loss of particles or variation in permeability, array of more than one layer of partially coalesced spherical, polymeric particles on the surface of a porous substrate, the particles having a morphology with predominantly polar or hydrophilic polymers on the surface.

By stable array, it is meant that the composite membrane is stable to normal operating and cleaning conditions including backflushing.

"Discrete, spherical, polymeric particles" as used herein refers to a dispersion of solid organic polymer in a dispersing liquid, or in a continuous medium that is capable of undergoing partial coalescence. The dispersing liquid or the continuous medium is water, or mixtures of alcohol and surfactants, or hydrocarbon. Preferably, the dispersing liquid or the continuous medium is water.

"Partial coalescence" as used herein refers to the ability of the particles of the polymer to adhere to each other and form stable contact points between each other as stimulated by physical and/or chemical means during the fabrication process without filling the interstitial voids between the particles. By forming stable contact points, it is meant that the array of particles is stable with respect to each other and also stable with respect to the porous substrate. Specifically, the composite membrane of this invention is stable to backflushing or conventional cleaning regimes. This means that the composite membrane is not significantly affected when the liquid flow through the membrane is reversed as it would be for cleaning.

"Array" as used in this application refers to the configuration or arrangement of particles on the surface of the porous substrate. In the context of this application, an array does not necessarily refer to a perfectly ordered crystalline structure although regions of short range order likely exist.

"Layers" in the array refers to the thickness of the discriminating layer formed on the porous substrate. For example, an array having two layers describes the situation where the statistical average of the thickness of the discriminating layer corresponds to two times the diameter of the particles making up the array. Those skilled in the art recognize that the surface of the porous substrate is generally irregular and that a two-layer discriminating array may have more or less than the statistical mean number of particles in any given region.

"Latex" as used herein refers to a dispersion of particles of polymers in a continuous medium, obtained by emulsion polymerization of the monomers.

The first step in the process of preparing the composite membrane involves depositing particles on the surface of a porous substrate. The deposition of the particles may be accomplished by a number of methods known in the art of coating technology. These methods include: dipping the substrate in a dispersion of particles; spraying a dispersion of particles on the substrate; kiss-coating or roll-coating particles on the substrate; and filtering the dispersion through the substrate. The deposition of the particles produces an array of particles on the surface. One preferred method of deposition of the particles on the porous substrate is filtration, at atmospheric pressure or under pressure, of the dispersion containing particles through the substrate.

In the practice of this invention, it is possible to obtain one or more layers of particles in the array and to have multiple coatings with particles of varying sizes and chemical compositions. The number of layers of the particles in the array may be controlled by varying the concentration of particles in the dispersion for a given surface area of the substrate to be coated. The desired number of layers of particles can be obtained by calculating the mass of coating required for a particular type of packing order of the particles in the array by methods known in the art. The packing order of the particles is discussed below. As an example, assuming a hexagonal close-packed array, for an array with four layers of particles, the mass of coating is calculated to be 0.10 mg/cm², 0.30 mg/cm², and 0.50 mg/cm² with particles having diameters of 0.20 µm, 0.60 µm and 0.90 µm, respectively.

The array may vary from about 1 layer of particles to about 1,000 layers of particles in thickness. Preferably, the array is from about 2 layers of particles to about 100 layers of particles in thickness. More preferably, the array is from about 3 layers of particles to about 20 layers of particles in thickness. In general, the number of layers that is most desirable in any given embodiment of the invention will depend on the intended use and on the size of the particles making up the layers. Generally, larger particles will result in fewer numbers of layers being used.

It is a particular advantage of the present invention that the averaging effect obtained by multiple layering of the particles significantly minimizes the impact of any defects in the array. By defect is meant discontinuities in the ordering of the particles making them less than perfectly crystalline. This permits composite membranes to be prepared in a commercially practical way. It is not necessary to take additional measures such as slow evaporation of the continuous phase of the dispersion or elimination of emulsifiers in the polymer preparation to obtain a functional membrane with narrow pore size distribution.

The layers of particles which make up the array may be applied simultaneously or sequentially and may be made up of particles of the same size or of different sizes. For example, one or more layers of relatively large particles may be applied to the porous substrate first, and then followed by one or more additional layers of smaller particles. One advantage of this technique is that the larger particles can increase the homogeneity of the porous substrate and facilitate the application of smaller particles. In other situations, layers of particles of the same size may be applied one layer at a time. An advantage of this technique is the preparation of a discriminating layer having minimized defects.

The preparation of the composite membrane generally involves the removal of the dispersing fluid. In the laboratory, the removal of the liquid may be accomplished by placing the composite in a chamber at about 65 percent relative humidity and allowing it to dry at ambient temperature or in an oven at elevated temperatures. In the manufacturing process, the removal of the dispersing liquid depends on the method employed for the deposition of the particles on the substrate. In roll-coating of the particles on the substrate, the removal of the dispersing liquid may be accomplished by evaporating the liquid at a given temperature depending upon the nature of the dispersing liquid. Deposition by filtration at atmospheric pressure or under pressure is particularly facile in removing a substantial amount of the dispersing liquid during the formation of the array.

The second step in preparing the composite membranes of the invention is stabilization of the composite. The stabilization of the composite may be achieved by thermal coalescence of the particles or chemical methods. The stabilization of the composite is necessary to obtain membranes which are stable, that is, membranes capable of passing water under pressure in either dead-end or cross-flow mode in either direction with minimal loss of particles or variation in permeability.

The extent of the thermal coalescence of the particles is a function of the annealing temperature and the glass transition temperature (Tg) of the particles or a component polymer in the particles. Particles of crosslinked polymers will be annealed at a higher temperature than the temperature at which uncrosslinked polymer will be. For example, a composite with particles of linear polystyrene annealed at 120°C for about thirty minutes is substantially nonporous with interstitial voids between the particles filled by the coalescing polymer, as evidenced by electron microscopy. On the other hand, polystyrene particles crosslinked with about 5 percent by weight of divinylbenzene coalesce to yield a porous composite. The annealing temperature can be lowered significantly below the Tg of the polymer of the particle by techniques known to the art including modifying the surface of the particle with another polymer with low Tg. Depending upon the intended use of the composite membrane, the stability, the mean pore size, and the pore size distribution of the membrane may be controlled by varying the annealing temperature and the extent of annealing introduced in the array of the composite.

Chemical methods of stabilizing the composite use a chemical reaction between the particles. The chemical reaction provides mechanical strengthening or reinforcement of the contact points between the particles. An example of the chemical reaction is crosslinking or curing of the particles. This may be achieved by modifying the surface of the particles by introducing monomers, having functional groups which are capable of undergoing crosslinking or curing, during polymerization in the process of preparing particles. Such monomers are known in the art. Exemplary of the monomers are glycidyl methacrylate, amide methylol and the like. Such reactive groups can also be introduced after the processing of the particles by post-adding oligomeric or polymeric species to the continuous phase of the dispersion. After formation of the array, these materials, having adsorbed on the surface of the particles, can react forming bridging linkages between the particles during the stabilization step.

Another chemical method of stabilizing the composite may be achieved by swelling the polymer particles with additional monomer or a mixture of monomers prior to the placement of the particles on the porous substrate. The amount of monomer or mixture of monomers used may vary from about 2 percent by weight to about 150 percent by weight of the particles. The mixture of monomers may include a monomer with a functional group capable of crosslinking and a suitable initiator for polymerization. The amount of monomer with the crosslinking functional groups may vary from about 1 percent to about 100 percent by weight of the monomer mixture. The initiator may be chosen from those known in the art. The amount of the initiator used varies from 0.05 percent to less than 2 percent by weight of the total weight of the added monomer. Preferably, the amount of initiator used is from 0.1 percent to 0.50 percent by weight of the total weight of the added monomer. Thermal initiators useful in the invention include higher alkyl peroxides or azo compounds, such as, azobisisobutyronitrile and t-butylperoctoate. Ultraviolet initiators include benzoin ethyl ether. The array of particles in the composite is exposed to ultraviolet light or heat to initiate polymerization which results in the adherence of the particles, and stabilization of the array.

Still another way of inducing stability to the composite is by adding plasticizer to the dispersion of particles. Plasticizers assist in reducing the mechanical properties of the polymers such as hardness and stiffness and Tg of the polymer. Plasticizers may be chosen from a group consisting of phthalate ester, phosphate esters, fatty acid esters, glycol derivatives, hydrocarbons, and hydrocarbon derivatives, ketones, and higher alcohols. Preferred plasticizers include di(2-ethylhexyl)phthalate, tricresyl phosphate, acetone, hexane, higher alcohols, and isooctane. The choice of the plasticizer, and the amount of plasticizer used depends upon its compatibility with the polymer or a polymer component of the particle. For example, for polymethylmethacrylate particles, the plasticizer chosen is a polar plasticizer such as acetone or t-butyl alcohol, which may be used in amounts varying from 5 percent to 25 percent by weight of the polymer solids in the dispersion.

Various factors influence the structure of the array and the porosity of the membrane, and consequently, the performance of the composite membrane of the invention. These include the substrate, the composition and morphology of the particles of the dispersion, and the uniformity of structure and degree of order in which the particles are packed.

The substrate materials suitable for this invention include those well known in the art and are commercially available. The substrates may be in the form of flat sheets or hollow fibers. Useful substrates include polysulfone, polyaryl sulfone, polyether sulfone, polyphenyl sulfone, polypropylene, cellulose, polycarbonate, polyphenylene oxide or polyvinyl chloride, Nylon, cellulose nitrate or cellulose acetate-nitrate, interwoven or felted fibers of paper, plastic or glass including filter paper, microporous ceramics, graphite or stainless steel, polyvinylidene fluoride or polytetra-fluoroethylene-co-ethylene, and the like.

The porous substrates generally possess irregular surfaces with broad pore size distributions. Consequently, the particles may not only be deposited in an array on or near the surface but may penetrate the pores and form an array internal to the pores of the substrate. The particles are predominantly located in an array on the surface of the substrate. This may be achieved by proper selection of the particle size and the pore size of the substrate, by chemical treatment of the substrate and of the particles, or by adjustments to the coating process such as using high shear in the coating process or presaturation of the substrate. Generally, the ratio of the size of the substrate pore to the size of the particle which is closest to the surface of the porous substrate is from 0.05 to 7.0. A preferred range is from 0.3 to 2.0.

It has been discovered that the location of the particles can be controlled conveniently by the electrostatic interaction between the surfaces of the particles and the porous substrate, respectively. Thus, a positively charged substrate provides better retention and adhesion of particles with an anionic surface. Further in the practice of this invention, the charge of the substrate can be conveniently controlled by the adsorption of charged species such as polyelectrolytes or surfactants. For example, the substrate is coated with a cationic surfactant, dimethyldicocoammonium chloride to obtain a positively charged substrate, before the deposition of the anionic particles. Dimethyldicocoammonium chloride is available under the trade name ARQUAD* from Akzo Chemie America. Examples of polyelectrolytes include polyacrylic acid, polymethacrylic acid, polyvinylbenzyl sulfonate, and the like. Generally, any ionic surfactants or polyelectrolytes known in the art are suitable for the purpose of the invention.

Particles for the purpose of this invention are obtained by dispersion polymerization processes known in the art, such as suspension polymerization, dispersion polymerization and emulsion polymerization. A preferred method of polymerization is emulsion polymerization.

The particles suitable for the purpose of this invention may be made from nonionic monoethylenically unsaturated monomers. The monomers and mixtures of monomers suitable for the purpose of this invention include: monovinyl aromatic monomers; aliphatic conjugated diene monomers; vinylidene halide and vinyl halide monomers; acrylate monomers; and vinyl esters of carboxylic acids containing from 1 to 18 carbon atoms, methacrylonitrile, and acrylonitrile.

Monovinyl aromatic monomers are monomers containing a moiety represented by the formula: 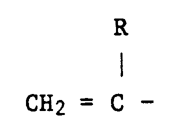 attached to an aromatic ring containing 6 to 10 carbon atoms. The aromatic ring may be substituted with alkyl or halogen substituents. R is hydrogen or a lower alkyl group having from 1 to 4 carbon atoms. Examples of monovinyl aromatic monomers include styrene, alpha methyl styrene, t-butyl styrene, vinyl toluene, and halogenated styrenes.

Representative conjugated dienes include isoprene, 1,3-butadiene, 2-methyl-1,3-butadiene, and other hydrocarbon analogs of 1,3-butadiene.

The acrylate monomers include monovinyl or divinyl acrylate or methacrylate monomers. Additionally, acrylate monomers include acids, esters, amides and substituted derivatives thereof. Preferred monovinyl acrylates are C₁-C₈ alkyl acrylates or methacrylates. Examples of acrylates include butyl acrylate, hexyl acrylate, 2-ethyl hexyl acrylate, t-butyl acrylate, methyl methacrylate, butylmethacrylate, hexylmethacrylate, and isobutylmethacrylate.

Suitable comonomers useful for the purpose of this invention are described in U.S.-A-5,157,071 and US-A-5,084,505.

The surface of the particles of the array represents the surface of the pores of the composite membrane of the invention. The surface of the particles may be modified to minimize adsorption of the solutes on the surface of the pores of the membrane thereby minimizing the fouling of the membrane in separation technology. Depending upon the chemistry of the solute mixture or particulate dispersion in the feed solution used in the separation process, it is possible to design a membrane starting with particles having appropriate predetermined surface chemistry to minimize the adsorption of the solutes thereon.

The surface of the particles may be modified by a number of methods. One of the methods is to incorporate charged end groups on the surface of the particle using water soluble initiators in the polymerization process. Another method for modifying the surface of the particles is to introduce monomers, which would induce an electrostatic charge and/or provide a layer of hydrated polymer. These monomers may be a component of the monomer mixture of the unseeded dispersion polymerization or be introduced into a seeded dispersion polymerization. Such monomers include, for example, acrylic acid and/or hydroxyethylacrylate.

Another method for modifying the surface of the particles is to include monomeric or polymeric surfactants typically known in the art for dispersed polymerization processes. Typically, the surfactant is added to the continuous phase of the dispersion. The amount of surfactant used is an amount sufficient to assist in stabilizing the particles as a colloid, and minimize contact between particles and prevent coagulation. The choice of the surfactant and the concentration of the surfactant varies with the concentration of the particle solids in the dispersion. The higher the polymer solid level, the higher the level of surfactant needed. The surfactant may also be chosen with regard to the nature of the solute mixture or dispersed particles to be treated in the separation process. An advantage of the present invention is that, while a wide variety of surfactants or surface active materials are suitable, it is generally satisfactory to use readily available conventional surfactants.

Typically, the surfactant is selected from cationic, anionic or non-ionic surfactants and mixtures thereof. The cationic or anionic surfactants are used when it is desirable to introduce an electrostatic charge. Non-ionic surfactants are used when it is desirable to introduce a hydrated surface layer onto the particles.

Examples of anionic surfactants include alkylated diphenyl oxide disulfonates, sodium dodecyl benzene sulfonates, and dihexylesters of sodium sulfosuccinic acid. Examples of cationic surfactants include dimethyldicocoammonium chloride, polypropoxy quaternary ammonium phosphate, and lauryl dimethylbenzyl ammonium chloride. Examples of nonionic surfactants include nonylphenoxypoly (ethyleneoxy)ethanols in various homologous series, ethoxylated alkyl phenols, and glycerol ethoxylates.

Still another method of modifying the surface of the particles is to adsorb polymers/oligomers thereon by techniques known in the art of coating. The adsorption is achieved by introducing solution polymers/oligomers into the continuous medium or dispersing liquid of the dispersion. Suitable polymers/oligomers include polyelectrolytes and hydrated polymers. Illustrative of polyelectrolytes include polymethacrylic acid, polyacrylic acid, polyvinylbenzyl sulfonate, poly(vinyl pyridinium chloride) and the like. Illustrative of hydrated polymers include poly N-vinylamide, poly(N-vinyl-2-pyrrolidone), polyacrylamide, polyvinylimides and the like.

The particles obtained by dispersion polymerization processes may have various physical and compositional morphologies. Compositionally, the particles may have homogeneous, core/shell, interpenetrating polymer network or microdomain morphology. The core/shell particles are characterized in that the polymer in the interior (core) of the particle is different from the polymer on the surface (shell) of the particle. There may be more than one concentric shell in the particle. The surface polymer thickness or shell thickness may be expressed as the percent of the diameter of the overall diameter. The core may be predominantly hydrophobic in nature, and the shell is hydrophilic in nature with a thin surface layer of a polymer which would undergo some chemical reaction which stabilizes the array after formation.

Homogeneous morphology is one in which the polymer or the copolymer is essentially uniform in composition independent of its location within the particle.

Interpenetrating polymer network morphology is one where the particles contain two polymers, each in a network form.

The microdomain morphology is a dispersion of one polymer within a particle giving rise to surface heterogeneities which have unique properties, e.g., adsorption characteristics.

A particle morphology having predominantly polar or hydrophilic polymer on the surface is the compositional morphology of the particles for the purpose of this invention.

Generally, the particles useful in this invention are spherical in shape and have sizes ranging from 0.0050 µm to 100.0 µm. It is preferred that the particle size is 20 µm or smaller.

The permeability of the composite membrane of the invention is a function of the surface and bulk porosity of its components. In the discriminating layer of particles, the surface and bulk porosity are a function of the degree of order in the packing of the particles in the array. Bulk porosity refers to the volumetric void volume. Surface porosity refers to the ratio of void cross-sectional area to the total surface area of the membrane.

It is known in the art that particles can form crystalline-like arrangements in the dispersed phase due to electrostatic repulsion between the particles. The particles can form hexagonal close-packed (HCP) structures or cubic close-packed (CCP) structures or mixtures thereof in the dried state as evidenced by electron microscopy. The degree of order in the packing of the particles defines the size distribution of the interstitial voids between the particles and the porosity of the array of the particles. The packing efficiency for HCP and CCP structure can be calculated by well known techniques described in J. V. Smith, Geometrical and Structural Crystallography, John Wiley & Sons, New York, 1982, Chapters 2 and 5; and H. E. White et al., J. Am. Ceram. Soc., 20, 155, (1937); and D. Dollimore, G. R. Heal, J. Colloid & Interface Sci. 43. 233 (1973), which are incorporated herein by reference for their teachings.

For CCP structure, the surface porosity of the array would be 21.5 percent and bulk porosity would be 47.6 percent. For HCP structure, the surface porosity of the array would be 9.3 percent and bulk porosity would be 26.0 percent. For a hexagonal close-packed structure, the pore size of the array is estimated to be about 15 percent of the particle size. A structure with a 100 percent uniformity represents the narrowest possible pore size distribution. The width of the pore size distribution of the array increases as the disorder in the packing of the particles increases. Spherical particles ranging in size from 0.0050 µm to 100.0 µm define a pore size of the membrane from 0.0008 µm to 15.0 µm, based on hexagonal close-packed structure.

The degree of the order in the packing of the particles is dependent upon various factors such as the kinetics of deposition of the particles, the solids of the dispersion of the particles, the size of the particles, the ionic strength of the dispersing medium as determined by the presence of electrolytes and other ionic materials present therein, and the drying conditions. The pore size distribution can be manipulated by selectively blending polymer particles of various sizes. In the practice of this invention, it is not necessary that the particles are arranged in a perfectly uniform structure without a defect. As discussed above, the versatility of the composite membranes of the invention lies in the fact that it is possible to selectively obtain an array with multiple layers of particles. During the separation process, the path a solute takes through the array of the composite membrane of the invention is tortuous. The multiple layering of the particles provides statistical averaging of the pore sizes such that the effect of the defects within the packing order of the particles on the pore size distribution is minimized.

Ultrafiltration and microfiltration membranes may be characterized in a variety of ways, including porosity, mean pore size, maximum pore size, bubble point, gas flux, water flux, and molecular weight cut off. Such techniques are well known in the art for characterizing microporous membranes. See Robert Kesting, Synthetic polymer Membranes, 2nd edition, John Wiley & Sons, New York, New York, 1985, pp. 43-64; Channing R. Robertson (Stanford University), Molecular and Macromolecular sieving by asymmetric ultrafiltration membranes, OWRT Report, NTIS No. PB35-1577661EAR, Sept. 1984, and ASTM Test Methods F316-86 and F317-72 (1982).

Pore size of the membrane may be estimated by several techniques including scanning electron microscopy, and/or measurements of bubble point, gas flux, water flux, and molecular weight cut off.

The microfiltration composite membranes of this invention are characterized in terms of nitrogen flux from 0 to 2.17 MPa (300 pounds per square inch above the atmospheric pressure (psig)) as determined by ASTM F316-70. The nitrogen flux of the composite membranes of the invention is a function of the corresponding flux of the porous substrate. Generally, the nitrogen flux of the composite membrane is greater than about 0.05 percent and less than about 100 percent of the corresponding nitrogen flux of the porous substrate, depending on the size of the particles and the conditions of stabilization.

The mean pore size of the membranes of this invention useful for microfiltration is preferably between 0.02 µm and 10 µm, more preferably between 0.05 µm and 5 µm; the maximum pore size of such membranes is preferably less than about 10 µm, more preferably less than about 8 µm.

The membranes of this invention useful for ultrafiltration are typically characterized by molecular weight cutoff (MWCO). Molecular weight cutoff is defined as the smallest molecular weight species for which the membrane has more than 90 percent retention. Ultrafiltration membranes, depending upon their pore size distribution, can retain polysaccharide species in the molecular weight range of 1,000 to 5,000,000.

The mean pore size of the membranes of this invention useful for ultrafiltration is preferably between 0.0005 µm and 0.10 µm, more preferably between 0.0010 µm and 0.05 µm; the maximum pore size of such membranes is preferably less than about 0.10 µm. more preferably less than about 0.08 µm.

The composite membranes of this invention exhibit a water flux, at about 25°C and about 0.17 MPa (10 psig), greater than about 0.05 percent and less than about 100 percent of the corresponding water flux of the microporous substrate depending upon the size of the particles and the conditions of stabilization.

The pure water permeability is measured according to the techniques known in the art. The water permeabilities of the composite membranes of the invention are measured with a dead-end stainless steel apparatus. The surface area of the membranes is about 12.5 cm². The pressures applied during the permeability measurements range from 0 to about 0.515 MPa (60 pounds per square inch above the atmospheric pressure (psig)).

### Specific Embodiments

The following examples are included for illustrative purposes only and are not intended to limit the scope of the invention or claims. All percentages are by weight unless otherwise indicated. In all the examples that follow, the particle sizes were measured by hydrodynamic chromatography, a technique well known in the art of emulsion polymer characterization.

### Example 1 - Preparation of Particles: Microfiltration Membranes

A series of particles made by emulsion polymerization useful in the manufacture of the membrane of this invention are listed in Table I. Their processing involved either a single stage polymerization or multistage polymerizations in sequence. Table I described particles of both uniform composition and structured morphology, e.g., core-shell. Typically, these polymerizations were carried out in a continuous addition mode which means a monomer(s) charge and an aqueous initiator charge were introduced as two separate screams into a 3.785 L (1-gallon) jacketed glass reactor equipped with a mechanical stirrer. The initial aqueous charge in the reactor typically included a surfactant material, such as the anionic Aerosol™ MA80 (American Cyanamide, Stanford CN), introduced at a level to reach the desired particle size, usually from 0.25 percent to 1 percent based on monomer(s). The aqueous initiation stream typically contained 1 percent by weight of sodium persulfate based on the weight of monomer. Prior to starting the polymerization, the monomer, aqueous charges, and the initial reactor charge were purged with nitrogen for thirty minutes. The reactor was maintained at 70°C and both the aqueous stream of sodium persulfate and the monomer(s) stream were fed continuously for about 6 hours. The reactor was then heated to about 85°C for about 30 minutes after the additions were completed. Typically, it was found that substantially all the monomer was converted to polymer giving an emulsion of from 30 to 50 percent solids depending on the amounts of monomer(s) added.

The distinction between single stage and multistage polymerization is that in the latter process there is present a seed latex particle in the initial reactor charge. It is well known in the art that successive polymerization using seeds enables development of particles of large size which cannot be made with classical emulsion polymerization methods in a single stage polymerization. Typically, in the development of the particles in Table I, those particles above 0.34 µm were made in a multistage process. In some instances, it is desirable to have the seed particle crosslinked into a network polymer in order to insure concentric placement of successive polymer shells. Divinylbenzene or allyl methacrylate are examples of such divinyl monomers useful at levels of 1 to 3 percent based on total monomer charge.

**TABLE I**

| Latex | Particle Size (µm) | Composition | Particle Morphology |
|---|---|---|---|
| 1A | 0.12 | PS/DVB | Homogeneous |
| 1B | 0.34 | PS/DVB | Homogeneous |
| 1C | 0.70 | PS/DVB | Homogeneous |
| 1D | 0.10 | PMMA | Homogeneous |
| 1E | 0.21 | PMMA | Homogeneous |
| 1F | 0.34 | PMMA | Homogeneous |
| 1G | 0.59 | PMMA | Homogeneous |
| 1H | 0.69 | PS/PMMA | Core/Shell |
| PS: Polystyrene PS/DVB: Polystyrene crosslinked with divinylbenzene PMMA: Poly(methyl methacrylate) | | | |

### Example 2 - Preparation of Particles with a Reactive Shell: Microfiltration Membranes

The stability of the composite membrane of this invention to backflushing and cleaning can be obtained by placement of reactive groups on the surface of the particles such that covalent bonds can be formed at the surface contact points after positioning the particles in the array. The particles described in Table II were made to illustrate this point based on the reaction of an epoxy group with a carboxylic acid to give a hydroxy ester linkage. The epoxy groups were introduced into the shell of the particle by use of glycidyl methacrylate monomer. Typically, the particles were placed on the substrate and then heat treated to covalently bond the contact points.

The particle on which the reactive shell was placed is identified in Table II as 2A. This is a 0.59 µm core-shell latex with polymethyl methacrylate polymerized on a polystyrene seed. The outer shell of this particle was modified with a crosslinked polymer containing methyl methacrylate, butyl acrylate, acrylic acid, allyl methacrylate and glycidylmethacrylate. The thickness, the glass transition temperature of the shell polymer, and the amount and type of reactive species were varied as described in Table II. The polymerization of these components onto the surface of the 0.59 µm seed particle was carried out with essentially the same procedures as described in Example 1.

**TABLE II**

| Latex | Particle Size (µm) | Outer Shell Composition | Shell Thickness nm (Å) | Calc. Tg of Shell (°C) |
|---|---|---|---|---|
| 2A | 0.59 | Core/Shell Polystyrene/Polymethylmethacrylate | | |
| 2B | 0.65 | MMA(58)/BA(18)/GMA(16)AMA(4)/AA(4) | 20.6 (206) | 80 |
| 2C | 0.64 | MMA(76)/GMA(16)AMA(4)/MAA(4) | 20.0 (200) | 115 |
| 2D | 0.66 | MMA(74)/BA(18)/AMA(4)/AA(4) | 19.5 (195) | 80 |
| MMA: methyl methacrylate GMA: glycidyl methacrylate BA: butyl acrylate AA: acrylic acid AMA: allyl methacrylate | | | | |

### Examples 3-6

Examples 3-6 illustrate the process of preparing composite membranes of the invention by different methods of deposition of the particles.

### Example 3 - Preparation of a Composite Membrane by Gravitational Filtration

A piece of porous polysulfone substrate, 6.2 cm in diameter with a nominal pore size of 0.2 µm, was mounted in a filtration cell (AMICON™ model 8200). The polysulfone is available under the tradename SUPOR™ 200 from Gelman Sciences, Inc. The substrate was rinsed using 40 g of (1:1) methanol/water solution. A sample of the dispersion of 0.7 µm polystyrene particles of Latex 1C, Table I, was diluted with deionized water to 0.02 percent solids. Fifty grams of the diluted sample were filtered onto the substrate without the addition of external pressure. The resulting composite was placed in a 120°C oven for 5 minutes after which it was characterized using electron microscopy and gas permeability data. The membrane had an array, of polymer particles, approximately 4 layers thick, deposited on the substrate surface with a mean flow pore size of 0.110 µm.

### Example 4 - Preparation of a Composite Membrane by Pressure Filtration

A 6.2 cm diameter piece of porous polysulfone substrate (SUPOR™ 200) with a nominal pore size of 0.2 µm, was mounted in a filtration cell (AMICON™ model 8200). The substrate was rinsed using 40 g of (1:1) methanol/water solution. A sample of the dispersion of 0.7 µm polystyrene particles of Latex 1C, Table I, was diluted with deionized water to 0.02 percent solids. Fifty grams of the diluted sample were filtered onto the substrate with the addition of 0.134 MPa (5 psig) of pressure to the feed side of the filtration cell. The resulting composite was placed in a 120°C oven for 5 minutes after which it was characterized using electron microscopy and gas permeability data. The membrane had an array of polymer particles, approximately 4 layers thick, deposited on the substrate surface and a mean flow pore size of 0.147 µm.

### Example 5 - Preparation of a Composite Membrane by Using a Meyer Rod

A 5.08 by 7.62 cm (2 inch by 3 inch) piece of porous polysulfone substrate, SUPOR™ 200, with a nominal pore size of 0.2 µm was soaked in deionized water for one minute. It was placed on a glass plate where the excess water was removed using a rubber roller. A sample of the dispersion of 0.34 µm polystyrene (Latex 1B, Table I) was diluted with deionized water to obtain a dispersion containing 2 percent by weight of solids and 0.5 percent by weight of alkylated diphenyl sulfonate surfactant available under the tradename DOWFAX™ 8390 from The Dow Chemical Company. To this diluted sample was added 8 percent styrene monomer, based on the weight of the polymer, containing benzoin ethyl ether at 0.1 percent by weight of styrene and the treated dispersion was placed at one end of the substrate. The substrate was coated by drawing the dispersion across the surface using a #4 Meyer rod. The excess dispersion was removed by blotting it from the glass plate. The sample was then placed in a chamber at approximately 65 percent relative humidity and allowed to dry at ambient temperature overnight. The coating was fixed by exposing it to ultraviolet radiation for twenty minutes. This membrane had a mean flow pore size of 0.104 µm.

### Example 6 - Preparation of a Composite Membrane by Dip Coating

A composite membrane was prepared by contacting one side of SUPOR™ 200 substrate with the surface of the dispersion of Example 5 for about ten seconds before it was removed and held vertically. The excess dispersion was blotted from the bottom edge after which the sample was laid flat, covered, and allowed to dry at about 65 percent relative humidity and ambient temperature overnight. The coating was fixed by exposing it to ultraviolet radiation for twenty minutes. This membrane had a mean flow pore size of 0.096 µm.

### Example 7 - Stabilization of the Composite Membrane by Thermal Annealing

Two composite membranes were prepared using the procedure described in Example 4 except only one of the membranes was annealed at 120°C for 5 minutes.

The stability of these membranes was examined by measuring the mean flow pore size of the composite membranes, with the particle layer of the composite in two different orientations with respect to the substrate and gas flow, namely, upstream and downstream. By feeding the gas such that the particle array was on the downstream side, the ability to disrupt the array with gas flow would be enhanced. By feeding the gas such that the particle array was on the upstream side thereby forcing the particles into the substrate would minimize any disruption to the array. The mean flow pore size, for the unannealed array with the particle layer located downstream, was found to be about the same as that of the uncoated SUPOR™ 200, namely 0.27 µm, indicating the unfixed coating was unstable. The results are illustrated in Table III below.

**TABLE III**

| Particle Layer Orientation | Mean Flow Pore Size Unstabilized (µm) | Mean Flow Pore Size Thermally Stabilized (µm) |
|---|---|---|
| Upstream | 0.147 | 0.167 |
| Downstream | 0.223 | 0.164 |

### Example 8 - Stabilization of the Composite Membrane by Chemical Fixation with Monomer

Two composite membranes were prepared. One was chemically stabilized and the other was not.

A 6.2 cm diameter piece of porous polysulfone substrate (SUPOR™ 200) with a nominal pore size of 0.2 µm, was mounted in a filtration cell, AMICON™ model 8200. The substrate was rinsed using 40 g of (1:1) methanol/water solution. A sample of the dispersion of 0.7 µm polystyrene particles of Latex 1C, Table I, was diluted with deionized water to 2.0 percent solids. This sample was treated with 8 percent styrene based on weight of the polymer solids. The styrene monomer contained 0.1 percent by weight benzoin ethyl ether. A sample of the treated dispersion was diluted with deionized water to 0.02 percent polymer solids and 50 g of the resulting dispersion were filtered onto the substrate with the addition of 0.135 MPa (5 psig) pressure to the feed side of the filtration cell. The resulting composite was stabilized by exposing it to ultraviolet radiation for 20 minutes. The membrane was tested for stability using the procedure described in Example 7. The stability results of the two composite membranes are illustrated in Table IV below.

**TABLE IV**

| Particle Layer Orientation | Mean Flow Pore Size Unstabilized (µm) | Mean Flow Pore Size Chemically Stabilized (µm) |
|---|---|---|
| Upstream | 0.147 | 0.153 |
| Downstream | 0.223 | 0.159 |

### Example 9 - Modification of the Pore Size and Pore Size Distribution of the Substrate

A membrane was prepared and stabilized as described in Example 8. The mean flow pore sizes and their standard deviation for the composite membrane and the uncoated polysulfone substrate, respectively, were measured using the dry/wet gas flow technique. The results are set forth below in Table V. The composite membrane had a smaller mean flow pore size and standard deviation than the polysulfone substrate.

**TABLE V**

| Sample | Mean Flow Pore Size (µm) | Standard Deviation (µm) |
|---|---|---|
| SUPOR™ 200 (substrate) | 0.27 | 0.18 |
| Composite | 0.146 | 0.039 |

### Example 10 - Constant Particle Size, Different Composition

Two membranes, each with a different dispersion, were prepared. One membrane was prepared with 0.7 µm polystyrene (PS) particles of Latex 1C, Table I, in accordance with the process of Example 8 except that the dispersion was treated with 4 percent by weight of styrene, based on the weight of the solids, containing 0.1 percent by weight of benzoin ethyl ether, based on the weight of styrene, and diluted to 0.02 percent solids. A second membrane was prepared with 0.69 µm PMMA/PS particles Latex 1H, Table I in accordance with the process of Example 8, except that the dispersion was treated with 4 percent by weight of (MMA), based on the weight of solids, containing 0.1 percent by weight of benzoin ethyl ether, based on the weight of MMA, and then diluted to 0.02 percent solids. The mean flow pore sizes and their standard deviation were measured using gas flow techniques. The results are illustrated in Table VI below. There is no significant difference in the mean flow pore sizes of the two membranes.

**TABLE VI**

| Particle | Mean Flow Pore Size (µm) | Standard Deviation (µm) |
|---|---|---|
| 0.7 µm Polystyrene (PS) | 0.153 | 0.035 |
| 0.69 µm PMMA/PS | 0.146 | 0.059 |

### Example 11 - Correlation of Pore Size to Particle Size

Two samples of the dispersions of polymethyl methacrylate particles, 0.21 µm (Latex 1E, Table I) and 0.34 µm (Latex 1F, Table I) in diameter, respectively, were prepared as described in Example 1. Each sample was treated with 4 percent by weight of MMA, based on the weight of solids, containing 0.1 percent by weight of benzoin ethyl ether, based on weight of MMA. The samples were then diluted to 0.01 percent and 0.02 percent solids, respectively. Two membranes were then prepared in accordance with the process of Example 8. The mean flow pore sizes and their standard deviation were measured by gas flow techniques. The results are illustrated in Table VII below. The data indicate that smaller particles produced smaller pores.

**TABLE VII**

| Particle Size (µm) | Mean Flow Pore Size (µm) | Standard Deviation (µm) |
|---|---|---|
| 0.21 | 0.0570 | 0.0115 |
| 0.34 | 0.0688 | 0.0114 |

### Example 12 - Control of Layer Thickness

A 2 percent solids sample of the dispersion of 0.34 µm polymethyl methacrylate (PMMA) (Latex 1F, Table I) was treated with 4 percent by weight of MMA, based on the weight of the solids, containing 0.1 percent by weight of benzoin ethyl ether, based on the weight of MMA. The sample was then diluted to 0.01 percent solids. Two membranes were fabricated using 49 g and 98 g of the monomer treated dispersion sample in accordance with the process of Example 8. The mean flow pore sizes and their standard deviation were measured by dry/wet flow techniques. The results are illustrated in Table VIII below. These data demonstrate that the transport properties of the membrane are influenced by the thickness of the deposited particle layer.

**TABLE VIII**

| Amount of Dispersion Applied (g) | Nitrogen Flux at 0.790 MPa (100 psig) Applied Pressure (mL s⁻¹ cm⁻²) | Mean Flow Pore Size (µm) | Standard Deviation (µm) |
|---|---|---|---|
| 48 | 457 | 0.1391 | .0039 |
| 98 | 291 | 0.1174 | .0025 |

### Example 13 - Pure Water Permeability of Microfiltration Membranes

Membranes were prepared with the dispersion of 0.70 µm polystyrene particles of Latex 1C, Table I and with the dispersion of 0.69 µm core/shell polystyrene-polymethyl methacrylate PS/PMMA (Latex 1H, Table I). Membranes were fabricated by using 50 grams of these dispersions by the filtration technique and stabilized by the methods described in the previous examples and listed in Table IX below. In one of the examples, ace tone was used as a coalescing aid, and introduced to the dispersion prior to filtration of the dispersion onto the porous substrate. The water permeabilities were measured in a 4 cm diameter dead-end filtration cell at 0.035 and 0.069 MPa (5 and 10 psi) by the procedures known in the art. The data for the composite membranes including the comparative data for SUPOR™ 200 substrate are reported in Table IX below.

**TABLE IX**

| Particle Type | Particle Size (µm) | Stabilization Method | Water Permeability (mL min⁻¹ cm⁻²) | |
|---|---|---|---|---|
| | | | 0.035 MPa (5 psi) | 0.069 MPa (10 psi) |
| PMMA-PS | 0.67 | 5 min. at 120°C | 8.6 | 13.0 |
| PMMA-PS | 0.67 | acetone | 8.4, 8.6 | 16.0, 16.8 |
| PMMA-PS | 0.67 | acetone/20 min. at 50°C | 7.1, 8.3 | 13.7, 16.2 |
| PMMA-PS | 0.67 | 4 percent MMA, UV | 7.6, 7.6 | 15.0, 14.1 |
| PMMA-PS | 0.67 | 8 percent MMA, UV | 7.4 | 13.8 |
| PS | 0.7 | 4 percent Styrene, UV | 6.9 | 14.5 |
| SUPOR™ 200 | -- | -- | 12.0 | 20.3 |

### Example 14 - Preparation of a Membrane with a Surface Modified Glycidylmethacrylate (GMA)Shell Polymer

A piece of porous polysulfone substrate, 6.2 cm in diameter with a nominal pore size of 0.45 µm was mounted in a filtration cell (AMICON™ Model 8200). The polysulfone, SUPOR™ 450, Gelman Sciences Inc., was wetted with a (1:1) methanol/water solution after which 50 mL of a 0.2 percent solution of a cationic surfactant, ARQUAD™ 2C-75 (Akzo Chemie America, McCook, IL) was filtered through the substrate, a fraction of which was retained on the surface. The polysulfone was flushed using 200 mL of deionized water with 0.014 MPa (2 psi) of applied pressure followed by the application of approximately 4 mL of a (1:1) methanol/water solution. A 20 percent solids sample of a 0.65 µm latex whose shell was modified with GMA (Latex 2B of Table II) was diluted to 0.02 percent. The glass transition temperature of this reactive shell was calculated to be approximately 80°C. Fifty grams of the diluted sample was filtered onto the substrate with the addition of 0.014 MPa (2 psi) of pressure to the feed side of the filtration cell. The resulting composite membrane was placed in an 120°C oven for 60 minutes. The thin layer of polymer particles was estimated to be 4 layers thick. This membrane had a pure water flux of 5.2 (mL min⁻¹cm⁻²) and a mean flow pore size of 0.116 µm.

### Example 15 - Measurement of Backflushing Stability

The membrane made in Example 14 was placed in the cell described in Example 13 such that the surface coated with particles was positioned downstream relative to the water flow on the low pressure side of the cell. The membrane was initially wetted with a (1:1) methanol/water solution. The water flux was then measured from 0.069 MPa (10 psi) to 0.276 MPa (40 psi) transmembrane pressure in 0.069 MPa (10 psi) increments for intervals of 10 minutes. After each measurement, the pressure was returned to 0.069 MPa (10 psi), and the water flux was again measured. The 0.069 MPa (10 psi) flux was determined to be constant independent of the applied transmembrane pressures which indicated that the membrane was essentially stable in this pressure regime. Elecronmicrographs taken before and after these pressure treatments indicated no change had occurred in the latex coating.

### Example 16 - Measurement of Membrane Stability to Caustic

Three samples of the membrane prepared in Example 14 were suspended in a stirred solution of 5.0 N NaOH at 75°C. The samples were removed at 30, 60 and 120 minutes, respectively, rinsed with deionized water and allowed to dry at ambient conditions overnight. Examination by electron microscopy indicated that no changes had occurred in the deposited surface layer of particles.

A membrane was prepared using the same procedure as Example 14 except that the membrane was dried at 110°C for 60 minutes. This membrane was mounted in a 10 cm diameter stainless steel crossflow filtration cell in which a 1.0 N solution of sodium hydroxide flowed across its surface for 30 minutes at 80°C. The cross-flow rate was 6.5 cm³/s. The membrane was removed from the cell, rinsed with deionized water and allowed to dry at ambient conditions overnight. Examination of the membrane with electron microscopy indicated that no change had occurred in the deposited surface layer. Subsequent examination of the water flux of this membrane as described in Example 13 indicated it was constant (0.069 MPa (10 psi)) for 8 hours.

### Example 17 - GMA Modified Particle: Membrane Stabilized at High Temperature

A membrane was prepared following the procedures of Example 13 except that the particles from Sample 2C of Table II were used. These particles had a shell polymer with a calculated glass transition temperature of approximately 115°C. Two membranes were made, cured for 1 and 2 hours at 150°C, respectively. The backflushing stability was measured as described in Example 15. The flux at 0.069 MPa (10 psi) was found to be independent of any higher pressures applied up to 0.276 MPa (40 psi). In addition, the mean pore size before and after the backflushing experiment was measured by gas permeability data as described in ASTM F316-70. These data are in Table X below.

**TABLE X**

| Sample | Heat Treatment | Water Flux -0.069 MPa (10 psi) (mL min⁻¹cm⁻²) | Mean Pore Size Prior/After Backflushing to 0.276 MPa (40 psi) |
|---|---|---|---|
| 1 | 1 hrs.-150°C | 6.1 | 0.146 µm/0.148 µm |
| 2 | 2 hrs.-150°C | 7.3 | 0.144 µm/0.144 µm |

### Example 18 - Post-Added Reagent Based Stabilization: Bisphenol A Diglycidyl Ether

A 20 percent solution of a 0.66 µm latex modified with a shell polymer containing carboxylic acid (Latex 2D of Table II) was blended with a molar equivalent of a 100 percent solution of bisphenol A diglycidyl ether and shaken for 30 minutes. The membrane was then prepared using the procedures of Example 14 except that it was placed in an oven for 16 hours at 80°C. Measurement of the backflushing stability as in Example 15 indicated that the 0.069 MPa (10 psi) water flux was independent of the applied membrane pressure up to 0.345 MPa (50 psi). Electronmicrographs obtained on these membranes indicated that the uniformity of the particle array was independent of the pressure regimes in these experiments.

### Example 19 - Preparation of Particles with a Reactive Shell: Ultrafiltration Membranes

The preparation of the membranes with pore sizes in the ultrafiltration range, 0.0010 µm to less than 0.1000 µm requires small particles below about 0.2000 µm. Such ultrafiltration membranes were prepared with the particles listed in Table XI. They were stabilized with a reactive shell based on the same chemistry described in Examples 14 and 17. Given the small size of these particles and the large amount of surface area, the shell thickness is relatively thin compared to the particles in Table II.

These particles have a core/shell morphology. The seed particles were a crosslinked polymethyl methacrylate particle (Table XI, latex 11A) with a diameter of 0.072 µm made in a continuous addition process as described in Example 1. This seed particle was then coated in a subsequent polymerization with the reactive shell identified in Table XI. The calculated glass transition temperature of the shells was 25°C. Four particles with a reactive shell are described in Table XI, each shell having a different thickness. Variation in shell thickness enabled fine control of the size discrimination properties of the ultrafiltration membranes made with these particles (see Example 22).

**TABLE XI**

| **Shell Composition** | | | |
|---|---|---|---|
| Latex | Particle Size (µm) | Outer Shell Composition | Shell Thickness nm (Å) |
| 11A | 0.072 | MMA(99.5)/AMA(0.5) | 0 |
| 11B | 0.075 | BA(41)/MMA(40)/GMA(15)/ AA(3.5)/AMA(0.5) | 1.6 (16) |
| 11C | 0.081 | BA(41)/MMA(40)/GMA(15)/ AA(3.5)/AMA(0.5) | 4.0 (40) |
| 11D | 0.094 | BA(41)/MMA(40)/GMA(15)/ AA(3.5)/AMA(0.5) | 10.3 (103) |
| 11E | 0.087 | BA(41)/MMA(40)/GMA(15)/ AA(3.5)/AMA(0.5) | 5.6 (56) |

### Example 20 - Ultrafiltration Membrane Fabrication

A piece of porous polysulfone substrate, 6.2 cm diameter with a nominal pore size of 0.1 µm was wetted with a methanol/water (1:1) solution and mounted in a filtration cell (AMICON™ model 8200). The polysulfone is available from Gelman Sciences, Inc. under the tradename SUPOR™ 100. The polysulfone was rinsed with 40 grams of a methanol/water (1:1) solution after which 50 mL of a 0.2 percent solids alcoholic solution (methanol/water (1:1) of ARQUAD™ 2C-75 surfactant (Akzo Chemie America; McCook, IL) was filtered through the substrate. The polysulfone was backflushed using 200 mL of deionized water with 0.114 MPa (2 psig) of applied pressure followed by the application of approximately 4 mL of a methanol/water (1:1) solution which was allowed to remain on the surface. A sample of latex 1D prepared in Example 1 was treated with ion-exchange resin (BIORAD™ AG 501-X8). The treated latex was then diluted to 0.02 percent solids. Fifty grams of the diluted sample were filtered onto the substrate with the addition of 0.114 MPa (2 psig) of pressure to the feed side of the filtration cell. The resulting composite was removed from the filtration cell and allowed to dry at ambient conditions. The thin coating of polymer particles was estimated to be 8 layers thick.

An AMICON™ TCF2 cross-flow cell was used to examine retention characteristics of the composite membrane and the SUPOR™ 100 substrate. The cross-flow rate was set to 27 mL/min, and a transmembrane pressure of 0.135 MPa (5 psig) was used. Both the composite membrane and unmodified substrate were challenged by a 0.01 percent dextran solution having molecular weights between 9,300 and 7,000,000 daltons. The molecular weight cutoff (MWCO), defined as the mass corresponding to 90 percent retention of dextran molecules, was determined by performing size exclusion chromatography on the permeate. The MWCO of the composite was 300,000 daltons while that of the substrate was greater than 10⁶ daltons.

### Example 21 - Ultrafiltration Membrane Fabrication: Multiple Coatings

Following the fabrication method described in Example 20, two membranes were prepared using latex 11E listed in Table XI of Example 19. The deposited coating was calculated to be 8 layers thick. A second, thinner coat (calculated to be approximately 2 layers) of the same particles was applied to one of the composites by pressure filtration (0.114 MPa (2 psig)) of the 0.02 percent solids latex. After each coating, the composite membrane was allowed to dry at ambient conditions.

The retention characteristics of these two membranes were compared by filtering a 0.01 percent solution of dextrans (9,300-2,000,000 daltons) through the membranes using the AMICON™ TCF2 cross-flow cell with a transmembrane pressure of 0.135 MPa (5 psig) and a cross-flow rate of 27 mL/min. Table XII compares the two MWCO values obtained from the concentration of dextrans in permeate samples collected during the first minute of filtration.

Electron micrographs of membranes 1 and 2 of Table XII indicated that the second coating filled in defects present in the first coating, providing a more uniform discriminating layer of particles.

**TABLE XII**

| Membrane | Latex | Layers in 1st Coating | Layers in 2nd Coating | MWCO (daltons) |
|---|---|---|---|---|
| 1 | 11E | 8 | 0 | >160,000 |
| 2 | 11E | 8 | 2 | 32,000 |

### Example 22 - Effect of Reactive Shell Thickness on Separation Performance

Multiple coated membranes were prepared, using latexes listed in Table XI (11B, 11C, and 11D), by the fabrication method described in Example 21. The initial particle coating was calculated to be 8 layers thick, and the second, thinner coat was approximately 2 layers.

A 0.004 percent solution of dextrans (9,300-100,000 daltons) was filtered through the resulting membranes using an AMICON™ 8050 stirred dead-end cell with no applied pressure. The MWCO values obtained from permeate samples collected at 45 minutes into the filtration are shown in Table XIII. That MWCO values greater than 100,000 daltons can be estimated results from the polydispersed nature of the 100,000 molecular weight dextran sample.

These data illustrate that the MWCO value is a function of the thickness of the reactive shell, enabling fine control of the size discrimination of these membranes.

**TABLE XIII**

| Membrane | Latex | Particle Size (µm) | Shell Thickness nm (Å) | MWCO (daltons) 45 minutes |
|---|---|---|---|---|
| 1 | 11B | 0.075 | 1.6 (16) | 150,000 |
| 2 | 11C | 0.081 | 4.0 (40) | 140,000 |
| 3 | 11D | 0.094 | 10.3 (103) | 120,000 |

### Example 23 - Composite Membrane Made by Layering Particles of Differing Sizes

Multiple coated membranes were prepared, using latex 1G listed in Example 1 and latex 11E listed in Example 19. The substrate had a nominal pore size of 0.2 µm and is available from Gelman Sciences, Inc. under the tradename SUPOR™ 200. A coating (calculated to be 4.6 layers thick) of 0.59 micron particles (latex 1G) was applied to the polysulfone substrate as described in Example 20. The resulting composite structure was stabilized by UV-induced polymerization of MMA (see Example 9). A second coat (calculated to be 8 layers thick) of 0.087 micron particles (latex 11E) was applied to the composite by pressure filtration at 0.114 MPa (2 psig). After drying at room temperature, a third coat (calculated to be 8 layers thick) of 0.087 micron particles was applied in the same way. The resulting structure was allowed to dry at room temperature.

Retention was examined through filtration of a 0.004 percent dextran solution (9,300-100,000 daltons) under the conditions described in Example 22. Values for the 90 percent retention mass (MWCO) for samples obtained at 1 and 45 minutes into the filtration are shown in entry 1 of Table XIV. For comparison, data obtained under the same conditions is shown in entry 2 of Table XIV for the 8+2 layer membrane of Example 22 made with latex 11D. Entries 1 and 2 of Table XVI show the permeate fluxes for these two membranes at 5 and 55 minutes into the filtration of the dextran solution.

These results illustrate how layering particles having different diameters can allow creation of composite membranes on larger pore substrates, resulting in increased flux, but similar retention characteristics.

**TABLE XIV**

| Membrane | Substrate | Layers of 0.087 µm Particles | MWCO (daltons) 1 minute | MWCO (daltons) 45 minutes |
|---|---|---|---|---|
| 1 | 0.2 | 8 + 8 | 25,000 | 91,000 |
| 2 | 0.1 | 8 + 2 | 63,000 | 120,000 |

### Example 24 - Effect of Coating Thickness on Separation Performance

Three multiple coated membranes were prepared using latex 1G listed in Example 1 and latex 11E listed in Table XI of Example 19, according to the fabrication method described in Example 23. In each case, 4.6 layers of 0.59 micron particles (latex 1G) and 8 layers of 0.087 micron (µm) particles (latex 11E) were applied and stabilized on a 0.2 µm polysulfone (SUPOR™ 200) substrate. An additional coating of either 0, 4, or 8 layers of 0.087 micron particles was applied by pressure filtration (0.114 MPa (2 psig)), and the structure was allowed to dry.

Retention characteristics were examined as described in Example 22. The observed molecular weight cutoff values under these conditions for permeate samples taken at 45 minutes into filtration are listed in Table XV. Permeate flux for these membranes during the filtration of the dextran solution is listed in Table XVI as entries 2 through 4.

These data illustrate that both MWCO and flux are influenced by layer thickness.

**TABLE XV**

| Membrane | Layers of 0.087 µm Particles | MWCO (daltons) 45 minutes |
|---|---|---|
| 1 | 8 + 0 | 110,000 |
| 2 | 8 + 4 | 100,000 |
| 3 | 8 + 8 | 92,000 |

**TABLE XVI**

| Membrane | Substrate | Layers of 0.087 µm Particles | Permeate Flux mL. cm⁻². min.⁻¹ (GFD) 5 Minutes | Permeate Flux mL. cm⁻². min.⁻¹ (GFD) 55 Minutes |
|---|---|---|---|---|
| 1 | 0.1 | 8 + 2 | 0.19 (60.1) | 0.18 (56.5) |
| 2 | 0.2 | 8 + 8 | 0.33 (103.2) | 0.29 (93.0) |
| 3 | 0.2 | 8 + 4 | 0.41 (130.3) | 0.37 (115.4) |
| 4 | 0.2 | 8 + 0 | 0.56 (178.1) | 0.48 (144.6) |

## Claims

1. A process of preparing a porous composite membrane comprising:
a) depositing discrete, spherical, polymeric particles, obtained by suspension, dispersion or emulsion polymerization on the surface of a porous substrate in one or more steps, whereby a composite with an array of particles on the substrate is obtained, the particles having a morphology with predominantly polar or hydrophilic polymers on the surface; and
b) using thermal coalescence of the particles or chemical means to stabilize the composite to obtain a composite membrane.

2. The process of Claim 1, wherein the particles of the dispersion comprise one or more polymers.

3. The process of Claim 2 wherein the composite membrane is stabilized by annealing at a temperature above the glass transition temperature of a polymer of the particles.

4. The process of Claim 1, wherein the composite membrane is stabilized by treating the particles with a monomer; a surfactant; or an oligomeric or polymeric material containing functional groups capable of undergoing chemical reaction.

5. The process of Claim 1, further comprising: treating the substrate, the particles, or both, by physical or chemical means to promote deposition of the particles on the surface of the substrate.

6. The process of Claim 1, wherein the pore size of the composite membrane is equal to or greater than 0.0008 µm and equal to or less than 15.00 µm.

7. The process of Claim 1 wherein the particles are deposited on the porous substrate and form an array having more than one layer.

8. The process of Claim 7 wherein the array consists of layers of particles of different sizes.

9. The process of Claim 8 wherein the particles in the layer closest to the surface are larger than the particles in subsequent layers.

10. The process of Claim 7 wherein the particles are the same size.

11. The process of Claim 1 wherein the particles have a hydrophilic surface.

12. A porous composite membrane comprising a stable i.e. capable of passing water under pressure in either dead-end or cross-flow mode in either direction with minimal loss of particles or variation in permeability, array of more than one layer of partially coalesced spherical, polymeric particles on the surface of a porous substrate, the particles having a morphology with predominantly polar or hydrophilic polymers on the surface.

13. The membrane of Claim 12 wherein the array consists of layers of particles of different sizes.

14. The membrane of Claim 13 wherein the particles in the layer closest to the surface are larger than the particles in subsequent layers.

15. The membrane of Claim 12 wherein the particles are the same size.

16. The membrane of Claim 12 wherein the particles have a hydrophilic surface.

17. The membrane of Claim 12, characterized by a pore size of equal to or greater than 0.0008 µm and equal to or less than 15.00 µm.

## Patentansprüche

1. Verfahren zur Herstellung einer porösen Verbundmembran, umfassend:
a) Ablagerung von diskreten sphärischen polymeren Teilchen, erhalten durch Suspensions-, Dispersions- oder Emulsions-polymerisation, auf der Oberfläche eines porösen Substrates in einer oder mehreren Stufen, wodurch ein Verbund mit einer regelmäßigen Anordnung von Teilchen auf dem Substrat erhalten wird, wobei die Teilchen eine Morphologie mit uberwiegend polaren oder hydrophilen Polieren auf der Oberfläche haben; und
b) Anwendung thermischer Koaleszenz der Teilchen oder chemischer Mittel zur Stabilisierung des Verbundes zum Erhalt einer Verbundmembran.

2. Verfahren nach Anspruch 1, bei welchem die Teilchen der Dispersion ein oder mehrere Polymere umfassen.

3. Verfahren nach Anspruch 2, bei welchem die Verbundmembran durch Anlassen auf eine Temperatur oberhalb des Einfrierbereiches von einem Polymeren der Teilchen stabilisiert wird.

4. Verfahren nach Anspruch 1, bei welchem die Verbundmembran durch Behandeln der Teilchen mit einem Monomeren, einem grenzflächenaktiven Mittel oder einem oligomeren oder polymeren Material, welches zum Eingehen von chemischen Reaktionen fähige funktionelle Gruppen enthält, stabilisiert wird.

5. Verfahren nach Anspruch 1, weiter umfassend: Behandeln des Substrates, der Teilchen oder beider durch physikalische Mittel zur Förderung der Ablagerung der Teilchen auf der Oberfläche des Substrates.

6. Verfahren nach Anspruch 1, bei welchem die Porengröße der Verbundmembran gleich oder größer als 0,0008 µm und gleich oder kleiner als 15,00 µm ist.

7. Verfahren nach Anspruch 1, bei welchem die Teilchen auf dem porösen Substrat abgelagert werden und eine regelmäßige Anordnung bilden, welche mehr als eine Schicht aufweist.

8. Verfahren nach Anspruch 7, bei welchem die regelmäßige Anordnung aus Schichten von Teilchen mit unterschiedlichen Größen besteht.

9. Verfahren nach Anspruch 8, bei welchem die Teilchen in der zur Oberfläche nächstliegenden Schicht größer sind als die Teilchen in den nachfolgenden Schichten.

10. Verfahren nach Anspruch 7, bei welchem die Teilchen dieselbe Größe haben.

11. Verfahren nach Anspruch 1, bei welchem die Teilchen eine hydrophile Oberfläche besitzen.

12. Poröse Verbundmembran, umfassend eine stabile, d. h. zum Durchtreten von Wasser unter Druck in entweder Sack- oder Gegenströmungsweise in jeder Richtung mit minimalem Verlust von Teilchen oder minimaler Veränderung der Permeabilität fähige, regelmäßige Anordnung von mehr als einer Schicht von partiell koaleszierten sphärischen polymeren Teilchen auf der Oberfläche eines porösen Substrates, wobei die Teilchen eine Morphologie mit überwiegend polaren oder hydrophilen Polymeren auf der Oberfläche haben.

13. Membran nach Anspruch 12, bei welcher die regelmäßige Anordnung aus Schichten von Teilchen mit unterschiedlichen Größen bestehen.

14. Membran nach Anspruch 13, bei welcher die Teilchen in der Oberfläche nächstliegenden Schicht größer sind als die Teilchen in den nachfolgenden Schichten.

15. Membran nach Anspruch 12, bei welcher die Teilchen dieselbe Größe haben.

16. Membran nach Anspruch 12, bei welcher die Teilchen eine hydrophile Oberfläche besitzen.

17. Membran nach Anspruch 12, gekennzeichnet durch eine Porengröße von gleich oder größer als 0,0008 µm und gleich oder kleiner als 15,00 µm.

## Revendications

1. Procédé de préparation d'une membrane composite poreuse comprenant :
a) le dépôt de particules polymères, sphériques, discrètes, obtenues par polymérisation en suspension, en dispersion ou en émulsion, sur la surface d'un substrat poreux en une ou plusieurs étapes, un composite présentant un arrangement de particules sur le substrat étant ainsi obtenu, les particules présentant une morphologie avec des polymères à prédominance polaire ou hydrophile sur la surface ; et
b) l'utilisation d'une coalescence thermique des particules ou de moyens chimiques pour stabiliser le composite et obtenir une membrane composite.

2. Procédé selon la revendication 1, dans lequel les particules de la dispersion comprennent un ou plusieurs polymères.

3. Procédé selon la revendication 2, dans lequel la membrane composite est stabitisée par recuit à une température supérieure à la température de transition vitreuse d'un polymère des particules.

4. Procédé selon la revendication 1, dans lequel la membrane composite est stabilisée par traitement des particules avec un monomère, un tensioactif, ou un matériau oligomère ou polymère contenant des groupes fonctionnels capables de subir une réaction chimique.

5. Procédé selon la revendication 1, comprenant en outre le traitement du substrat, des particules ou des deux, par des moyens physiques ou chimiques pour favoriser le dépôt des particules sur la surface du substrat.

6. Procédé selon la revendication 1, dans lequel la taille des pores de la membrane composite est supérieure ou égale à 0,0008 µm, et inférieure ou égale à 15,00 µm.

7. Procédé selon la revendication 1, dans lequel les particules sont déposées sur le substrat poreux et forment un arrangement présentant plus d'une couche.

8. Procédé selon la revendication 7, dans lequel l'arrangement est constitué de couches de particules de différentes tailles.

9. Procédé selon la revendication 8, dans lequel les particules dans la couche la plus proche de la surface sont plus grosses que les particules dans les couches suivantes.

10. Procédé selon la revendication 7, dans lequel les particules sont de même taille.

11. Procédé selon la revendication 1, dans lequel les particules présentent une surface hydrophile.

12. Membrane composite poreuse comprenant un arrangement stable, c'est-à-dire, capable de laisser passer de l'eau sous pression dans l'un des modes de filtrations classique et tangentielle, dans un sens ou l'autre avec une perte minimale de particules ou une variation minimale de perméabilité, de plus d'une couche de particules polymères, sphériques, partiellement fusionnées sur la surface d'un substrat poreux, les particules présentant une morphologie avec des polymères à prédominance polaire ou hydrophile sur la surface.

13. Membrane selon la revendication 12, dans laquelle l'arrangement est constitué de couches de particules de différentes tailles.

14. Membrane selon la revendication 13, dans laquelle les particules dans la couche la plus proche de la surface sont plus grosses que les particules dans les couches suivantes.

15. Membrane selon la revendication 12, dans laquelle les particules sont de même taille.

16. Membrane selon la revendication 12, dans laquelle les particules présentent une surface hydrophile.

17. Membrane selon la revendication 12, caractérisée par une taille des pores supérieure ou égale à 0,0008 µm, et inférieure ou égale à 15,00 µm.
